# EUROPEAN PATENT APPLICATION

(11) **EP 4 353 631 A1**
(43) Date of publication of application: **17.04.2024**
(21) Application number: 22845383.3
(22) Date of filing: 21.07.2022
(51) Int. Cl.: B65G 1/04

(54) **TRANSFER ROBOT**

(30) Priority: 23.07.2021 CN 202121689285 U
(71) Applicant: Hangzhou Hikrobot Co., Ltd., Hangzhou, Zhejiang 310051 (CN)
(72) Inventor: WU, Lingdong, Hangzhou, Zhejiang 310051 (CN); WU, Chao, Hangzhou, Zhejiang 310051 (CN)
(74) Representative: Goddar, Heinz J.
(86) International application number: PCT/CN2022/106959
(87) International publication number: WO 2023/001219

(57) **Abstract**

A transfer robot includes a support (2), a fork (3), a flexible lifting member (43), and a lifting power assembly. The flexible lifting member (43) is wound around the support (2), and the lifting power assembly is connected with the flexible lifting member (43). The fork (3) is able to vertically move along the support (2). A first end of the flexible lifting member (43) is bypassed from a top part of the support (2) and connected with a top end of the fork (3), and a second end of the flexible lifting member (43) is bypassed from a bottom end of the support (2) and connected with the bottom part of the fork (3).

## Description

### CROSS REFERENCE TO RELATED APPLICATIONS

This patent application claims a priority of Chinese patent application No. 202121689285.6, filed on July 23, 2021, the entire content of which is incorporated herein by reference.

### TECHNICAL FIELD

The present disclosure relates to the field of material transfer technology, specifically to a transfer robot.

### BACKGROUND

Intelligent warehousing is a link in the logistics process. The application of intelligent warehousing ensures the speed and accuracy of data input at all stages of warehouse management, ensures that enterprises can timely and accurately grasp the real data of inventory, and reasonably maintains and controls corporate inventory.

Among them, the transfer robot plays an important role in intelligent warehousing. The transfer robot can accept instructions to pick up and transfer goods at designated locations, improving the efficiency of transfer in the warehouse.

### SUMMARY

In view of this, embodiments of the present disclosure provide a transfer robot that can more accurately determine a lifting height of a fork.

An embodiment of the present disclosure provides a transfer robot, including a support, a fork, a flexible lifting member, and a lifting power assembly; where the flexible lifting member is wound on the support; the lifting power assembly is connected with the flexible lifting member; the fork is configured to vertically move up and down along the support; a first end of the flexible lifting member is bypassed from a top part of the support and connected with a top end of the fork, and a second end of the flexible lifting member is bypassed from a bottom part of the support and connected with a bottom end of the fork.

According to an embodiment of the present disclosure, the support includes a fixed frame and a movable frame; where the movable frame is mounted on the fixed frame and is able to vertically move up and down along the fixed frame, and the fork is mounted on the movable frame.

According to an embodiment of the present disclosure, the support includes a first side part and a second side part, the first side part and the second side part are parallel in a vertical direction and spaced apart; a first side of the fork is on the first side part of the support, and a second side of the fork is on the second side part of the support; the flexible lifting member includes a first flexible lifting sub-member and a second flexible lifting sub-member, the first flexible lifting sub-member is mounted on the first side part of the support, and the second flexible lifting sub-member is mounted on the second side part of the support.

According to an embodiment of the present disclosure, the lifting power assembly includes a first lifting power sub-assembly and a second lifting power sub-assembly. The first lifting power sub-assembly includes a first driving motor and a first driving wheel. The first flexible lifting sub-member is wound on the first driving wheel. A first end of the first flexible lifting sub-member is connected with a top end of the first side of the fork, and a second end of the first flexible lifting sub-member is connected with a bottom end of the first side of the fork.

According to an embodiment of the present disclosure, the second lifting power sub-assembly includes a second driving motor and a second driving wheel. The second flexible lifting sub-member is wound on the second driving wheel. A first end of the second flexible lifting sub-member is connected with a top end of the second side of the fork, and a second end of the second flexible lifting sub-member is connected with a bottom end of the second side of the fork.

According to an embodiment of the present disclosure, the transfer robot further includes a first auxiliary transmission member. The first auxiliary transmission member is mounted on the first side part of the support. The first auxiliary transmission member includes a first driven wheel, a second driven wheel, a third driven wheel, and a fourth driven wheel. The first driven wheel is mounted on a top part of the fixed frame, the second driven wheel is mounted on a bottom part of the movable frame, the third driven wheel is mounted on a top part of the movable frame, and the fourth driven wheel is mounted on a bottom part of the fixed frame. The first flexible lifting sub-member is wound in sequence on the first driving wheel, the first driven wheel, the second driven wheel, the third driven wheel, and the fourth driven wheel.

According to an embodiment of the present disclosure, the first auxiliary transmission member further includes a fifth driven wheel, where the fifth driven wheel is mounted between the first driving wheel and the first driven wheel, and the first flexible lifting sub-member is wound on the fifth driven wheel.

According to an embodiment of the present disclosure, the transfer robot further includes a second auxiliary transmission member. The second auxiliary transmission member is mounted on the second side part of the support. The second auxiliary transmission member includes a sixth driven wheel, a seventh driven wheel, an eighth driven wheel, and a ninth driven wheel. The sixth driven wheel is mounted on the top part of the fixed frame, the seventh driven wheel is mounted on the bottom part of the movable frame, the eighth driven wheel is mounted on the top part of the movable frame, and the ninth driven wheel is mounted on the bottom part of the fixed frame. The second flexible lifting sub-member is wound in sequence on the second driving wheel, the sixth driven wheel, the seventh driven wheel, the eighth driven wheel, and the ninth driven wheel.

According to an embodiment of the present disclosure, the second auxiliary transmission member further includes a tenth driven wheel, where the tenth driven wheel is mounted between the second driving wheel and the sixth driven wheel, and the second flexible lifting sub-member is wound on the tenth driven wheel.

According to an embodiment of the present disclosure, a guider is provided between the fixed frame and the movable frame, and the guider includes a roller wheel assembly. The roller wheel assembly includes a first roller wheel sub-assembly and a second roller wheel sub-assembly. The first roller wheel sub-assembly is mounted on the top part of the fixed frame, and the second roller wheel sub-assembly is mounted on the bottom part of the movable frame, and the second roller wheel sub-assembly is configured to move up or down together with the movable frame.

The embodiment of the present disclosure provides a transfer robot that connects the fork and the flexible lifting member through the flexible lifting member, forming a closed loop between the flexible lifting member and the fork, and a distance moved by the flexible lifting member is the lifting distance of the fork, which is convenient for more accurately determining the lifting height of the fork.

### BRIEF DESCRIPTION OF DRAWINGS

In order to more clearly illustrate the technical solution in this embodiment, a brief introduction will be given below to the accompanying drawings required in the description of the embodiments. It is obvious that the drawings in the following description are only some embodiments of the present disclosure, and for those skilled in the art, other drawings can be obtained based on these drawings without creative effort.
FIG. 1 is a structural schematic diagram of a transfer robot according to embodiments of the present disclosure;
FIG. 2 is a structural schematic diagram of a lifting power assembly in the transfer robot shown in FIG. 1;
FIG. 3 is a structural schematic diagram of a flexible lifting member in the transfer robot shown in FIG. 1;
FIG. 4 is a top view of the transfer robot according to embodiments of the present disclosure;
FIG. 5 is a structural schematic diagram of a roller wheel assembly in the transfer robot shown in FIG. 1.

### DETAILED DESCRIPTION

The following provides a detailed description of the disclosed embodiments with reference to the drawings.

It should be noted that the embodiment described is only a part of the embodiments of the present disclosure, not all embodiments. Based on the embodiments in the present disclosure, all other embodiments obtained by those skilled in the art without creative effort are within the scope of the present disclosure.

At present, a lifting function of the transfer robot is mainly realized by directly connecting a fork with a steel wire rope. The fork is in a suspended state, and the lifting of the fork is realized by winding or unwinding the steel wire rope. In this way, when monitoring a specific lifting height of the fork, a winding looseness of the steel wire rope is inconsistent, a number of winding turns is too much, and the outer steel wire rope is wound on the inner steel wire rope, all of which will make the calculated height data not very accurate and the error is large.

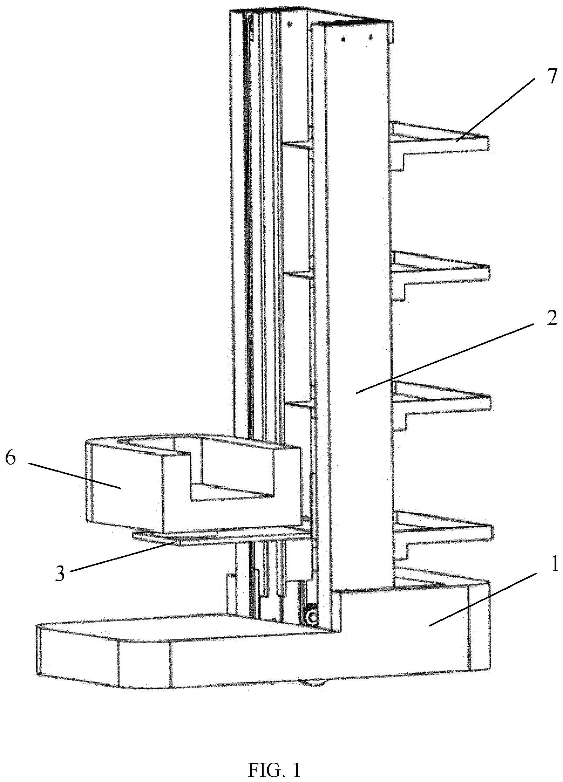

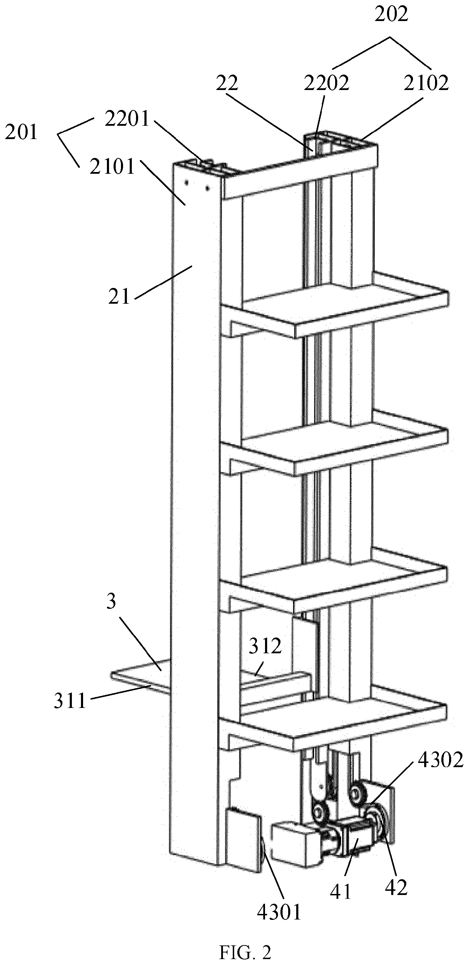

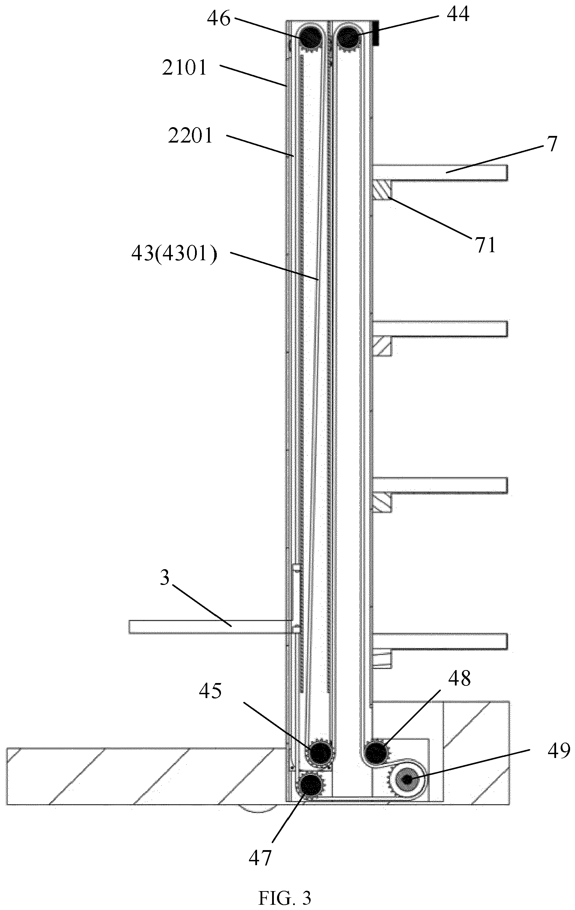

FIG. 1 is a structural schematic diagram of a transfer robot according to embodiments of the present disclosure. As shown in FIG. 1, the transfer robot of the present disclosure can include a support 2, a flexible lifting member (such as a flexible lifting member 43 shown in FIG. 3), and a lifting power assembly (such as a driving motor 41 shown in FIG. 2 and a driving wheel 42 shown in FIG. 3); the flexible lifting member 43 is wound on the support 2; the lifting power assembly is connected with the flexible lifting member 43, for example, the flexible lifting member 43 is wound on the driving wheel of the lifting power assembly; a fork 3 that is able to move up or down along the support 2 is provided on the support 2, a first end of the flexible lifting member 43 is bypassed from the top part of the support 2 and connected with a top end of the fork 3, and a second end of the flexible lifting member 43 is bypassed from a bottom end of the support and connected with a bottom part of the fork 3, where the top part of the support 2, for example, is the upper part of the support 2 shown in FIG. 1, and the bottom part of the support 2, for example, is the lower part of the support 2 shown in FIG. 1.

The fork 3 is also known as a pallet fork, its function is to lift the goods to be transferred and provide support for the goods, such that the goods on the fork can move up or down with the fork.

In the present disclosure, a first end of the flexible lifting member 43 is connected with a top end of the fork 3, a second end of the flexible lifting member 43 is connected with a bottom end of the fork 3, the fork 3 is connected with the flexible lifting member 43, and the flexible lifting member 43 is wound around the support 2. When detecting a lifting height of the fork 3, a rotation distance of the flexible lifting member 43 is the lifting distance of the fork 3. This rotation distance has a small error and is less affected by various factors, making it easier to accurately determine the lifting height of the fork. Compared to the traditional method of using steel wire ropes for winding and unwinding to achieve the lifting of the fork, the transfer robot with this structure avoids impacts of the winding looseness of the steel wire rope, the number of winding turns of the steel wire rope, and different circumferences of each turn of the steel wire rope on the accuracy of the lifting distance detection of the fork 3.

In this embodiment, the flexible lifting member includes chains, synchronous belts, steel wire ropes, or flat belts, which are not limited to these in this embodiment. As shown in FIG. 2, the driving motor 41 of the transfer robot is a servo motor, which is configured to detect the lifting distance of the fork 3, for example, by calculating the rotation angle of the servo motor and the mechanical transmission relationship to determine the lifting distance of the fork 3. The lifting power assembly includes the driving motor 41 and the driving wheel 42, which are directly connected or connected through a deceleration mechanism, which is not limited to this in this embodiment. FIG. 2 is a schematic diagram of a structure of the driving motor 41 in the transfer robot shown in FIG. 1; FIG. 3 is a schematic diagram of a structure of the flexible lifting member 43 in the transfer robot shown in FIG. 1. As shown in FIG. 2 and FIG. 3, in an embodiment, the support 2 includes a fixed frame 21 and a movable frame 22, where the movable frame 22 is mounted on the fixed frame 21 and is able to move up or down along the fixed frame 21 in the vertical direction, and the fork 3 is mounted on the movable frame 22.

The support 2 includes a first side part 201 and a second side part 202, where the first side part 201 and the second side part 202 are arranged in parallel in a vertical direction and spaced apart; a first side 311 of the fork 3 is on the first side part 201 of the support 2, and a second side 312 of the fork 3 is on the second side part 202 of the support.

The first side part 201 of the support 2 includes a first fixed frame 2101 and a first movable frame 2201, where the first movable frame 2201 is embedded in the first fixed frame 2101 and is able to move vertically along the first fixed frame 2101.

The second side part 202 of the support 2 includes a second fixed frame 2102 and a second movable frame 2202, where the second movable frame 2202 is embedded in the second fixed frame 2102 and is able to move vertically along the second fixed frame 2102.

The first side part 201 and the second side part 202 of the support 2 can also be understood as the left side part 201 and the right-side part 202 of the support 2 shown in FIG. 2.

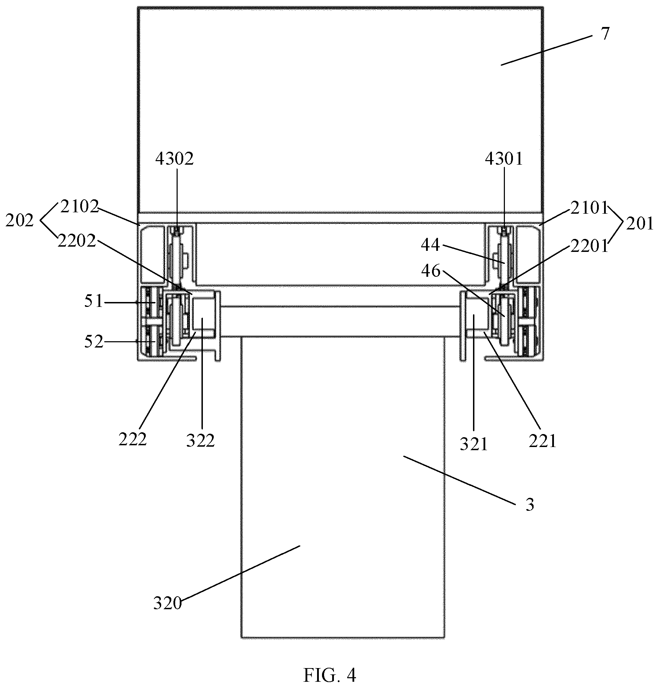

In an embodiment, as shown in FIG. 4, the fork 3 includes a fork plate 320 and a first sliding block 321 and a second sliding block 322 respectively on both sides of the fork plate 320. A side of the first movable frame 2201 is provided with a first sliding groove 221, and a side of the second movable frame 2202 opposite to the side of the first movable frame 2201 is provided with a second sliding groove 222. The first sliding groove 221 and the second sliding groove 222 both extend vertically, and there is a first sliding block 321 in the first sliding groove 221, and there is a second sliding block in the second sliding groove 222. When the fork plate 320 moves up or down vertically, the first sliding block 321 slides in the first sliding groove 221, and the second sliding block 322 slides in the second sliding groove 222. This configuration achieves the overall position limiting function on the fork 3, allowing the fork 3 to move only in the vertical direction, reducing the shake of the fork 3 in the horizontal direction, and improving the stability of the fork 3 in a process of vertically moving up and down.

In some embodiments, the connection between the fork 3 and the first movable frame 2201 and the second movable frame 2202 is not limited to the cooperation between the sliding blocks and sliding grooves. In order to make the lifting of the fork 3 smoother without jamming, a combination of pulleys and tracks can also be used, as long as the limit of position of the fork body 3 can be achieved, making the fork 3 to lift stably and reduce horizontal shaking. This embodiment does not provide specific limitations on this.

The flexible lifting member 43 includes a first flexible lifting sub-member 4301 and a second flexible lifting sub-member 4302. The first flexible lifting sub-member 4301 is on the first side part 201 of the support 2, and the second flexible lifting sub-member 4302 is on the second side part 202 of the support 2. The two sets of flexible lifting members 4301 and 4302 can move synchronously under the drive of the lifting power assembly.

In some embodiments, the lifting power assembly includes a first lifting power sub-assembly and a second lifting power sub-assembly. The first lifting power sub-assembly is on the first side part 201 of the support 2, and the second lifting power sub-assembly is on the second side part 202 of the support 2. The first lifting power sub-assembly includes a first driving motor (not shown in the figure, the structure of the first driving motor can refer to the second driving motor 41 in FIG. 2) and a first driving wheel 49. A first end of the first flexible lifting sub-member 4301 is connected with the top end of the first side 311 of the fork 3, and a second end of the first flexible lifting sub-member 4301 is connected with the bottom end of the first side 311 of the fork 3.

The second lifting power sub-assembly includes a second driving motor 41 and a second driving wheel 42. A first end of the second flexible lifting sub-member 4302 is connected with the top end of the second side 312 of the fork 3, and a second end of the second flexible lifting sub-member 4302 is connected with the bottom end of the second side 312 of the fork 3.

In an embodiment, the first driving motor and the second driving motor 41 can be two separate motors, the first driving motor and the second driving motor 41 are configured to drive the two driving wheels, respectively. In another embodiment, the first driving motor and the second driving motor 41 can also be a same motor, which is a dual-axis motor. Two output shafts of the dual-axis motor are configured to drive two driving wheels respectively. The motor can also be a single-axis motor, which is configured to drive the driving wheels on both sides of the motor to rotate simultaneously through a deceleration mechanism. This embodiment is not limited to this.

In an embodiment, the transfer robot also includes a first auxiliary transmission member, which is on the first side part 201 of the support 2.

The first auxiliary transmission member includes a first driven wheel 44, a second driven wheel 45, a third driven wheel 46, and a fourth driven wheel 47.

The first driven wheel 44 is at a top part of the first fixed frame 2101, the second driven wheel 45 is at a bottom part of the first movable frame 2201, the third driven wheel 46 is at the top part of the first movable frame 2201, and the fourth driven wheel 47 is at the bottom part of the first fixed frame 2101.

The first flexible lifting sub-member 4301 is wound sequentially on the first driving wheel 49, the first driven wheel 44, the second driven wheel 45, the third driven wheel 46, and the fourth driven wheel 47, forming an S-shaped structure to adjust a tension and movement direction of the first flexible lifting sub-member 4301.

In an embodiment, in order to adjust the tension of the first flexible lifting sub-member 4301, the first auxiliary transmission member further includes a fifth driven wheel 48, where the fifth driven wheel 48 is between the first driving wheel 49 and the first driven wheel 44. The first flexible lifting sub-member 4301 is wound sequentially on the first driving wheel 49, the fifth driven wheel 48, the first driven wheel 44, the second driven wheel 45, the third driven wheel 46, and the fourth driven wheel 47.

In an embodiment, the transfer robot further includes a second auxiliary transmission member, where the second auxiliary transmission member is on the second side part 202 of the support 2.

The second auxiliary transmission member includes a sixth driven wheel, a seventh driven wheel, an eighth driven wheel, and a ninth driven wheel.

The sixth driven wheel is at a top part of the second fixed frame 2102, the seventh driven wheel is at bottom part of the second movable frame 2202, the eighth driven wheel is at the top part of the second movable frame 2202, and the ninth driven wheel is at the bottom part of the second fixed frame 2102.

The second flexible lifting sub-member 4302 is wound sequentially on the second driving wheel 42, the sixth driven wheel, the seventh driven wheel, the eighth driven wheel, and the ninth driven wheel, forming an S-shaped structure to adjust a tension and movement direction of the second flexible lifting sub-member 4302.

In an embodiment, in order to further adjust the tension of the second flexible lifting sub-member 4302, the second auxiliary transmission member further includes a tenth driven wheel, where the tenth driven wheel is between the second driving wheel 42 and the sixth driven wheel. The second flexible lifting sub-member is wound sequentially on the second driving wheel 42, the tenth driven wheel, the sixth driven wheel, the seventh driven wheel, the eighth driven wheel, and the ninth driven wheel. The setting of the second auxiliary transmission member can refer to the setting of the first auxiliary transmission member in FIG. 3, and specific drawings and numerals are not provided here.

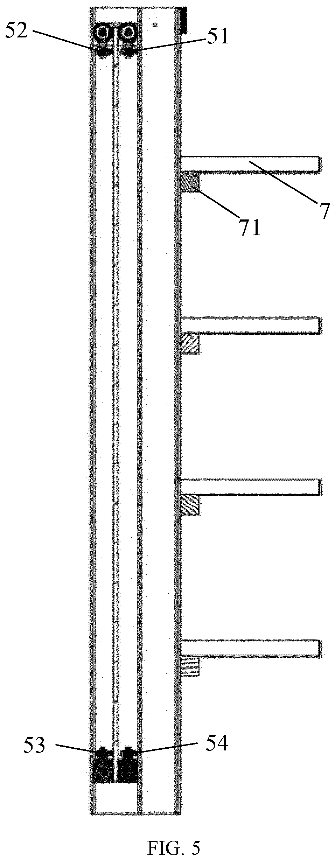

FIG. 4 is a top view of the transfer robot according to embodiments of the present disclosure; FIG. 5 is a structural schematic diagram of a rolling wheel assembly. As shown in FIG. 4 and FIG. 5, in an embodiment, a guider is provided between the fixed frame 21 and the movable frame 22, where the guider includes a rolling wheel assembly to change a sliding friction between the fixed frame 21 and the movable frame 22 into a rolling friction. The rolling wheel assembly is symmetrically arranged on the first side part 201 and the second side part 202 of the support 2, and the following will explain on the rolling wheel assembly on one side as an example.

Taking the rolling wheel assembly on the second side part 202 of the support 2 as an example, the rolling wheel assembly includes a first rolling wheel assembly and a second rolling wheel assembly.

The first rolling wheel assembly is at the top part of the second fixed frame 2102, and the second rolling wheel assembly is at the bottom part of the second movable frame 2202, and the second rolling wheel assembly can move up or down together with the second movable frame 2202.

The first rolling wheel assembly includes a first rolling wheel 51 and a second rolling wheel 52, where the first rolling wheel 51 and the second rolling wheel 52 are installed on the web plate of the second fixed frame 2102. The first rolling wheel 51 and the second rolling wheel 52 contact the wing plate of the second movable frame 2202. When the second movable frame 2202 moves up or down, the first rolling wheel 51 and the second rolling wheel 52 roll along the second movable frame 2202, avoiding the hard friction between the second fixed frame 2102 and the second movable frame 2202, reducing the wear of the second fixed frame 2102 and the second movable frame 2202, improving durability, and extending service life.

The second rolling wheel assembly includes a third rolling wheel 53 and a fourth rolling wheel 54, where the third rolling wheel 53 and the fourth rolling wheel 54 are installed on the web plate of the second movable frame 2202. The third rolling wheel 53 and the fourth rolling wheel 54 contact the wing plate of the second fixed frame 2102. When the second movable frame 2202 moves up or down, the third rolling wheel 53 and the fourth rolling wheel 54 roll along the second fixed frame 2102 and move up or down with the second movable frame 2202. The setting of the third rolling wheel 53 and the fourth rolling wheel 54 avoids the hard friction between the second fixed frame 2102 and the second movable frame 2202, reduces the wear of the second fixed frame 2102 and the second movable frame 2202, improvs durability, and extends service life. Similarly, the first side part 201 of the support 2 also includes a rolling wheel assembly, and the setting of the rolling wheel assembly in the first side part 201 can refer to the setting of the rolling wheel assembly in the second side 202, which is not repeated here.

In another embodiment, the guider can further include a slider block in the fixed frame 21 and a guide rail groove in the movable frame 22, or a slider block in the movable frame 22 and a guide rail groove in the fixed frame 21. The fixed frame 21 and the movable frame 22 move through the slider block and the guide rail groove, which can make their movement more stable, play a certain direction guiding role, and avoid the shaking of the movable frame 22 on the fixed frame 21.

The working process of the transfer robot in this embodiment includes: the driving motor operates, the driving wheel rotates in a first direction, the flexible lifting member 43 rotates in the first direction, and then the fork 3 moves up. When the fork 3 moves up and touches a position limiter at a top part of the movable frame 22, there is no relative displacement between the fork 3 and the movable frame 22. At this time, the driving motor continues to operate, to drive the fork 3 and the movable frame 22 to move up together until that the bottom part of the movable frame moves up to the position limiter at the top part of the fixed frame 21, and the movable frame 22 and the fork 3 stop moving up, which is the highest state that can be lifted.

The driving motor operates in an opposite direction, the driving wheel rotates in a second direction, the flexible lifting member 43 rotates in the second direction, the movable frame 22 and the fork 3 moves down together, and when the movable frame 22 moves down until completely retracting into the fixed frame 21, the movable frame 22 no longer moves down. The driving motor continues to operate in the opposite direction, and the fork 3 continues to move down relative to the movable frame 22 until it reaches a predetermined lowest point, and the driving motor stops rotating; where the first direction and the second direction are opposite directions.

In this embodiment, when the fork 3 moves up or down within a certain range, for example, when the fork 3 is moved up or down within a height range of the fixed frame 21, the overall height of the transfer robot will not change. Only when picking up and placing goods at a higher position, the movable frame 22 will move upward and extend out of the fixed frame 21. At this time, the height of the entire transfer robot will increase, such that in some warehouse environments with height restrictions, the flexibly movement can be achieved, and the utilization rate of the warehouse is improved.

In an embodiment, the transfer robot further includes a chassis component 1, and the support 2 is mounted on the chassis component 1, where the chassis component 1 provides support for the support 2.

In an embodiment, the fork 3 further includes an execution component 6, where the execution component 6 is configured to carry boxes or cartons on external workstations or shelves.

In an embodiment, one side of the fixed frame 21 is horizontally provided with a shelf board 7, where the shelf board 7 is set back-to-back with the fork 3.

The shelf board 7 is configured to temporary storage of goods. The execution component 6 can carry the boxes or cartons on external workstations or shelves to the shelf board 7. After the shelf board 7 is full of goods, all the goods can be transferred to corresponding positions at once. In actual application, if there is no need for temporary storage of goods, the shelf board can also be omitted.

In this embodiment, there is at least two shelf boards 7, and the at least two shelf boards 7 are evenly spaced-distributed in the vertical direction. In actual use, a number of shelf boards 7 can be reasonably selected according to the size of the goods or the height of the fixed frame 21, and this embodiment does not limit it.

In order to enhance the support strength of the shelf board 7, a reinforcement rib plate 71 is provided at a connection corner between the shelf board 7 and the fixed frame 21 to avoid the shelf board 7 from breaking due to overload.

In an embodiment, the chassis component 1 can use AGV to achieve the movement of the transfer robot on the ground and transport the goods to the designated position.

AGV (Automated Guided Vehicle) refers to a transport vehicle equipped with electromagnetic or optical automatic navigation devices, which can travel along a specified navigation path, has safety protection and various loading and unloading functions, and is a transfer vehicle without a driver in industrial applications, powered by a rechargeable battery. It can generally be controlled by a computer to set its travel path and behaviour, or use an electromagnetic track (electromagnetic path-following system) to establish its travel path, and the electromagnetic track is pasted on the floor, the unmanned transfer vehicle relies on the information brought by the electromagnetic track to move and operate.

The transfer robot provided in the present disclosure reduces measurement errors compared to the previous method of using steel wire ropes for winding or unwinding, making it more accurate in determining the height of the fork 3 and/or the movable frame 22 during moving up and down, thus avoiding issues such as goods touching the top part of a building or misplacing goods. Moreover, compared to the current lifting method, the fork does not experience jamming or inability to continue descending due to its own gravity during the descent process.

It should be noted that the focus of the described solutions varies among the embodiments in the present disclosure, but there is a certain interrelation among them. When understanding the present disclosure, the various embodiments can be referred to each other. Additionally, relational terms such as "first" and "second" are merely used to distinguish one entity or operation from another entity or operation, and do not necessarily require or imply any actual relationship or sequence between these entities or operations. Furthermore, the terms "include," "comprise," or any other variation thereof are intended to encompass non-exclusive inclusion, such that a process, method, item, or device that includes a series of elements not only includes those elements, but also includes other elements that are not explicitly listed, or also includes elements inherent to such process, method, item, or device. Without further limitations, the elements limited by the statement "including one..." do not exclude the existence of other identical elements in the process, method, item, or device that includes the said elements.

The above-described embodiments are examples of the present disclosure, but the scope of protection is not limited to these embodiments. Any changes or replacements that can be easily thought of by technical personnel familiar with the art within the scope of technology disclosed in this disclosure should be covered within the scope of protection of this disclosure. Therefore, the scope of protection disclosed in this disclosure shall be based on the scope of protection of the claims.

## Claims

1. A transfer robot, comprising:
a support;
a fork, mounted on the support and capable of vertically moving up and down along the support;
a flexible lifting member, wound around the support; and
a lifting power assembly, connected with the flexible lifting member;
wherein a first end of the flexible lifting member is bypassed from top part of the support and connected with a top end of the fork, and a second end of the flexible lifting member is bypassed from a bottom part of the support and connected with a bottom end of the fork.

2. The transfer robot according to claim 1, wherein the support comprises a fixed frame and a movable frame; and
the movable frame is mounted on the fixed frame and is able to move vertically along the fixed frame, and the fork is mounted on the movable frame.

3. The transfer robot according to claim 2, wherein the support comprises a first side part and a second side part, wherein the first side part and a second side part are arranged in parallel in a vertical direction and spaced apart;
a first side of the fork is on the first side part of the support, and a second side of the fork is located on the second side part of the support; and
the flexible lifting member comprises a first flexible lifting sub-member and a second flexible lifting sub-member, and the first flexible lifting sub-member is mounted on the first side part of the support, and the second flexible lifting sub-member is mounted on the second side part of the support.

4. The transfer robot according to claim 3, wherein the lifting power assembly comprises a first lifting power sub-assembly and a second lifting power sub-assembly;
the first lifting power sub-assembly comprises a first driving motor and a first driving wheel, the first flexible lifting sub-member is wound around the first driving wheel, a first end of the first flexible lifting sub-member is connected with a top end of a first side of the fork, and a second end of the first flexible lifting sub-member is connected with a bottom end of a first side of the fork.

5. The transfer robot according to claim 4, wherein the second lifting power sub-assembly comprises a second driving motor and a second driving wheel, the second flexible lifting sub-member is wound around the second driving wheel, a first end of the second flexible lifting sub-member is connected with a top end of a second side of the fork, and a second end of the second flexible lifting sub-member is connected with a bottom end of a second side of the fork.

6. The transfer robot according to claim 4, further comprising a first auxiliary transmission member; wherein the first auxiliary transmission member is mounted on the first side part of the support;
wherein the first auxiliary transmission member comprises a first driven wheel, a second driven wheel, a third driven wheel, and a fourth driven wheel;
the first driven wheel is mounted at a top part of the fixed frame, the second driven wheel is mounted at a bottom part of the movable frame, the third driven wheel is mounted at a top part of the movable frame, and the fourth driven wheel is mounted at a bottom part of the fixed frame; and
the first flexible lifting sub-member is wound sequentially around the first driving wheel, the first driven wheel, the second driven wheel, the third driven wheel, and the fourth driven wheel.

7. The transfer robot according to claim 6, wherein the first auxiliary transmission member further comprises a fifth driven wheel, the fifth driven wheel is mounted between the first driving wheel and the first driven wheel, and the first flexible lifting sub-member is wound around the fifth driven wheel.

8. The transfer robot according to claim 5, further comprising a second auxiliary transmission member; wherein the second auxiliary transmission member is mounted on the second side part of the support;
wherein the second auxiliary transmission member comprises a sixth driven wheel, a seventh driven wheel, an eighth driven wheel, and a ninth driven wheel;
the sixth driven wheel is mounted at a top part of the fixed frame, the seventh driven wheel is mounted at a bottom part of the movable frame, the eighth driven wheel is mounted at a top part of the movable frame, and the ninth driven wheel is mounted at a bottom part of the fixed frame; and
the second flexible lifting sub-member is wound sequentially around the second driving wheel, the sixth driven wheel, the seventh driven wheel, the eighth driven wheel, and the ninth driven wheel.

9. The transfer robot according to claim 8, wherein the second auxiliary transmission member further comprises a tenth driven wheel, the tenth driven wheel is mounted between the second driving wheel and the sixth driven wheel, and the second flexible lifting sub-member is wound around the tenth driven wheel.

10. The transfer robot according to claim 3, wherein a guider is provided between the fixed frame and the movable frame, and the guider comprises a roller wheel assembly;
the roller wheel assembly comprises a first roller wheel sub-assembly and a second roller wheel sub-assembly; and
the first roller wheel sub-assembly is mounted at a top part of the fixed frame, and the second roller wheel sub-assembly is mounted at a bottom part of the movable frame, the second roller wheel sub-assembly is configured to move up or down together with the movable frame.

11. The transfer robot according to claim 2, wherein a shelf board is horizontally provided on one side of the fixed frame, the shelf board being set back-to-back with the fork.
